Europäisches Patentamt

European Patent Office

Office européen des brevets

(11) Numéro de publication: **0 371 368**
**A1**

## (12) DEMANDE DE BREVET EUROPEEN

(21) Numéro de dépôt: 89121468.6

(22) Date de dépôt: 20.11.89

(51) Int. Cl.⁵: **H04L 27/38**

(30) Priorité: 25.11.88 FR 8815420

(43) Date de publication de la demande:
06.06.90 Bulletin 90/23

(84) Etats contractants désignés:
DE ES FR GB IT NL SE

(71) Demandeur: ALCATEL TRANSMISSION PAR
FAISCEAUX HERTZIENS A.T.F.H.
55, rue Greffulhe
F-92301 Levallois-Perret Cédex(FR)

(72) Inventeur: Gressier, Alain
116 rue Danton
F-92300 Levallois-Perret(FR)

(74) Mandataire: Weinmiller, Jürgen et al
Lennéstrasse 9 Postfach 24
D-8133 Feldafing(DE)

(54) Dispositif d'alarme pour boucle de costas utilisée dans un dispositif de transmission numérique par faisceaux hertziens.

(57) Dispositif d'alarme apte à signaler l'état de déverrouillage ou de verrouillage incorrect d'une boucle de Costas.

Les yeux saturés (X1, Y1) de chacune des deux voies en quadrature (X, Y) du signal démodulé sont appliqués à un différentiateur (28, 29) de leurs fronts de montée et descente, dont les signaux de sortie (30, 31) sont appliqués à un circuit "OU". Si les bords de ces yeux (X1, Y1) sont partiellement ou totalement fermés, on obtient des séries de doublets d'impulsions séparés de la largeur-bit, ce que détecte un circuit comportant un diviseur par quatre (41) et un oscillateur de remise à zéro (43). La présence dans ce cas de larges impulsions en sortie (S) est détectée par un intégrateur (47) suivi d'un circuit à seuil (50).

Fig. 4

## DISPOSITIF D'ALARME POUR BOUCLE DE COSTAS UTILISEE DANS UN DISPOSITIF DE TRANSMISSION NUMERIQUE PAR FAISCEAUX HERTZIENS

La présente invention se rapporte à un dispositif d'alarme apte à signaler l'état de déverrouillage ou de verrouillage incorrect d'une boucle de Costas faisant partie d'un dispositif de démodulation cohérente utilisé dans une installation de transmission numérique par faisceaux hertziens, cette installation utilisant la Modulation d'Amplitude en Quadrature.

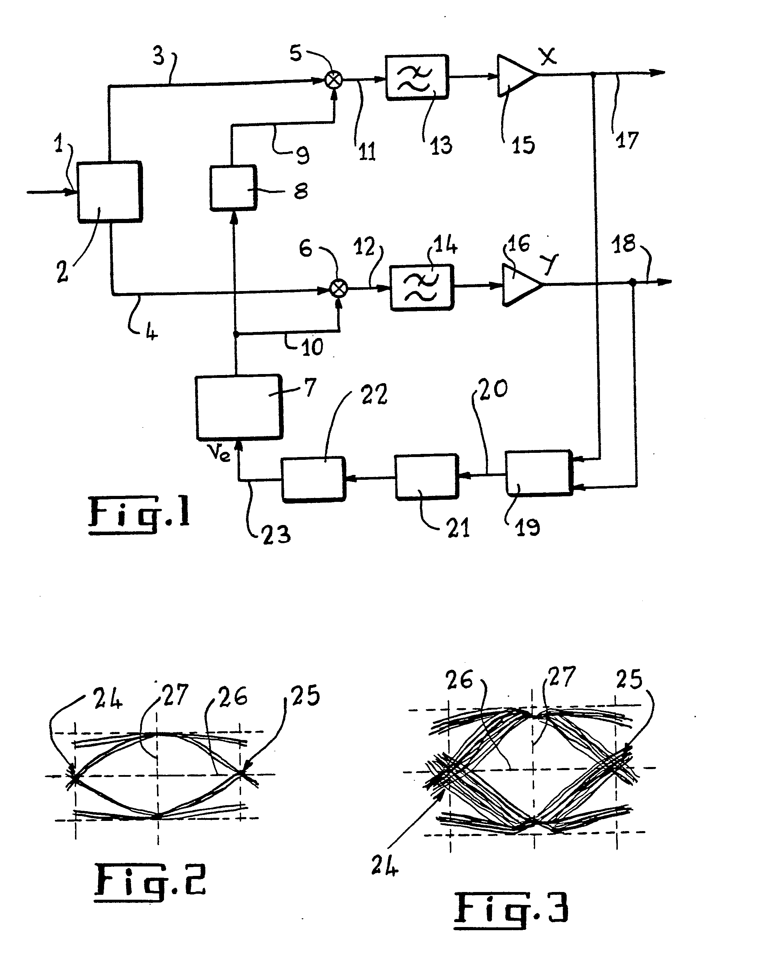

La figure 1 jointe est un schéma simplifié d'une boucle de Costas faisant partie de la partie réception d'une installation de transmission numérique qui utilise la Modulation d'Amplitude en Quadrature à quatre états, ou MAQ 4.

Le signal modulé, en fréquence intermédiaire à 70 Megahertz par exemple, est appliqué en 1 à un coupleur 2 dont chacune des deux sorties en phase 3, 4 est respectivement appliquée à un mélangeur 5, 6. Le mélangeur 6 qui est associé à la voie 4 reçoit sur son autre entrée 10 un signal en provenance d'un oscillateur commandé en tension, ou "V.C.O.", 7, centré sur la fréquence intermédiaire précitée, tandis que ce même signal est appliqué, par l'intermédiaire d'un déphaseur de 90 degrés 8, à la seconde entrée 9 du mélangeur 5 associé à l'autre voie 3.

Les signaux en bande de base qui sont récupérés sur les sorties respectives 11, 12 des mélangeurs 5, 6, passent successivement chacun à travers un filtre, respectivement 13 et 14, et un amplificateur, respectivement 15 et 16, et ces signaux en quadrature X et Y sont appliqués, en 17 et 18, aux circuits ultérieurs de régénération et décodage.

Le signal différentiel apparaissant entre 17 et 18 est appliqué à un estimateur de phase 19 qui fournit sur sa sortie 20 un signal d'erreur. Ce signal d'erreur est appliqué, à travers un filtre de boucle 21, à un dispositif de balayage 22 dont la tension de sortie Ve en 23 vient commander le V.C.O. 7 pour l'excursionner afin de réaliser finalement le verrouillage de la boucle.

Les trois états possibles d'une telle boucle de Costas sont les suivants :
. état de verrouillage correct ;
. état de déverrouillage ;
. état de verrouillage incorrect : il s'agit d'un verrouillage sur la fréquence de réception, additionnée ou retranchée par un sous-multiple de la fréquence rythme.

Seul le premier de ces trois états représente un fonctionnement correct de la boucle, de sorte qu'il parait souhaitable d'adjoindre à cette dernière un dispositif d'alarme qui est, autant que possible, activé lorsque l'on se trouve dans l'un ou l'autre des deux autres états.

Des dispositifs d'alarme pour boucle de Costas ont déjà été proposés antérieurement.

Un premier dispositif connu utilise la tension d'erreur Ve de la boucle. Lorsque cette dernière est déverrouillée, le dispositif de balayage fait varier cette tension d'erreur Ve de l'une de ses tensions de butée à l'autre, à la fréquence déterminée par les éléments de ce dispositif de balayage. La détection de ces variations de la tension d'erreur Ve permet alors de déclencher l'alarme.

Ce dispositif connu a pour inconvénient de ne pas permettre la détection des états de "verrouillage incorrect" ci-dessus définis. Il utilise d'autre part un comparateur à fenêtre pour la tension d'erreur Ve, ce qui a pour inconvénient de faire déclencher l'alarme avant le déverrouillage de la boucle.

Un autre dispositif connu complète ce premier dispositif par un organe de détection des verrouillages incorrects, en utilisant un échantillonnage, à un instant choisi, de l'oeil par l'horloge rythme régénérée. L'inconvénient de ce dernier dispositif d'alarme est sa dépendance vis-à-vis du verrouillage de la boucle de récupération du rythme.

L'invention vise à remédier à ces inconvénients, et à satisfaire de surcroît à des contraintes de simplicité, de fiabilité face au bruit et aux fluctuations de tension d'alimentation, ainsi que de facilité de mise en oeuvre. Elle se rapporte à cet effet à un dispositif d'alarme pour boucle de Costas qui est équipé de moyens pour détecter un défaut de synchronisme des instants de passage à zéro entre les deux voies en quadrature du signal démodulé en bande de base, en sortie de la boucle de Costas, ou en d'autres termes pour détecter un défaut de synchronisme entre le bord de l'oeil relatif à la première voie en quadrature X et le même bord de l'oeil relatif à la seconde voie en quadrature Y, et pour déclencher l'alarme en conséquence. En particulier ces moyens comprennent, pour chacune des deux voies en quadrature X et Y, un organe différentiateur auquel est appliqué le signal de l'oeil saturé correspondant, cet organe fournissant une impulsion respectivement pour chaque front de montée et pour chaque front de descente du signal correspondant à l'oeil saturé. Les signaux de sortie de chacun de ces deux organes différentiateurs, pour la voie X et pour la voie Y respectivement, sont appliqués à une porte "OU" qui est elle même suivie d'un circuit apte à détecter la présence de doublets d'impulsions séparés l'un de l'autre par un intervalle de temps égal à la largeur-bit du signal modulant, et à déclencher en conséquence une alarme.

Selon une forme préférentielle de réalisation, ce dernier circuit comporte un compteur binaire diviseur par quatre qui est remis à zéro par un signal carré non nécessairement synchrone du signal démodulé, et dont les créneaux ont une largeur sensiblement égale à la largeur-bit augmentée de l'intervalle moyen entre les deux impulsions de chacun desdits doublets. Le signal de sortie, divisé par quatre, de ce compteur binaire est appliqué à un dispositif d'intégration, suivi d'un circuit à seuil dont la sortie fournit le signal d'alarme souhaité, c'est à dire le signal caractérisant l'état de déverrouillage ou de verrouillage incorrect de la boucle de Costas.

De toute façon, l'invention sera bien comprise, et ses avantages et autres caractéristiques ressortiront, lors de la description suivante d'un exemple non limitatif de réalisation d'un dispositif d'alarme pour boucle de Costas, en référence au dessin schématique annexé dans lequel :

- Figure 2 est un diagramme de l'oeil relatif à une des deux voies en quadrature dans le cas d'un verrouillage correct;

- Figure 3 est le même diagramme de l'oeil dans le cas d'un verrouillage incorrect ;

- Figure 4 est un schéma électrique de ce dispositif d'alarme ; et

- Figure 5 est un chronogramme permettant d'expliquer le fonctionnement du dispositif de la figure 4.

La figure 2 montre la forme de l'"oeil" relatif à l'une des voies X ou Y précitées, dans le cas où la boucle de Costas de la figure 1 est correctement verrouillée. On voit nettement que les instants de passage à zéro 24, 25 des signaux binaires successifs qui, superposés comme schématisés sur la figure 2, forment ce que l'on appelle l'"oeil", sont rigoureusement ponctuels et bien définis sur l'axe des temps 26. Les signaux sur les deux voies en quadrature étant rigoureusement synchrones, il s'ensuit que tous les instants de passage à zéro 24, 25 des signaux binaires sur les voies X et Y sont synchrones entre ces deux voies.

La figure 3 illustre de même, avec de nouveau les amplitudes en ordonnées 27 et le temps en abscisses 27, l'oeil obtenu, pour la voie X aussi bien que pour la voie Y, en cas de verrouillage incorrect de la boucle. Dans un tel cas, les bords de l'oeil 24 et 25 sont "fermés", c'est à dire que les instants de passage à zéro ne sont pas tous identiques, de sorte que les bords 24 et 25 ne sont pas ponctuels. Il s'ensuit que l'instant de passage à zéro d'un signal binaire sur la voie X n'est pas synchrone de l'instant de passage à zéro du signal binaire correspondant sur la voie Y.

Lorsque la boucle est déverrouillée, les signaux binaires sur la voie X et sur la voie Y ne sont plus du tout corrélés entre eux, de sorte que l'oeil est complètement "fermé".

Il résulte de ces constatations que :
. lorsque la boucle de Costas est correctement verrouillée, les instants de passage à zéro 24, 25 des signaux binaires sont rigoureusement synchrones sur les deux voies en quadrature X et Y ;
. lorsque cette boucle est déverrouillée ou incorrectement verrouillée, ces mêmes instants de passage à zéro ne sont pas synchrones sur les deux voies en quadrature X et Y.

C'est cette propriété qui est utilisée ici afin de déclencher une alarme en cas de déverrouillage ou de verrouillage incorrect de la boucle de Costas, et, dans ce but, il est prévu :
- de saturer les yeux sur les voies X et Y, ou d'utiliser les yeux saturés éventuellement disponibles sur ces deux voies, afin que le bruit soit transformé en gigue, moins gênante pour le comptage qui va être effectué, comme expliqué ci-après ;
- de différentier les fronts de montée et les fronts de descente des signaux binaires saturés formant ces yeux, sur chacune des deux voies en quadrature X et Y, afin d'obtenir une impulsion respectivement pour chaque front de montée et pour chaque front de descente ;
- d'appliquer ces impulsions à une porte "OU" ; et
- de détecter, à la sortie de cette porte "OU", la présence répétitive de doublets d'impulsions séparés l'un de l'autre par un intervalle de temps égal à la largeur-bit afin, dans un tel cas, de déclencher l'alarme.

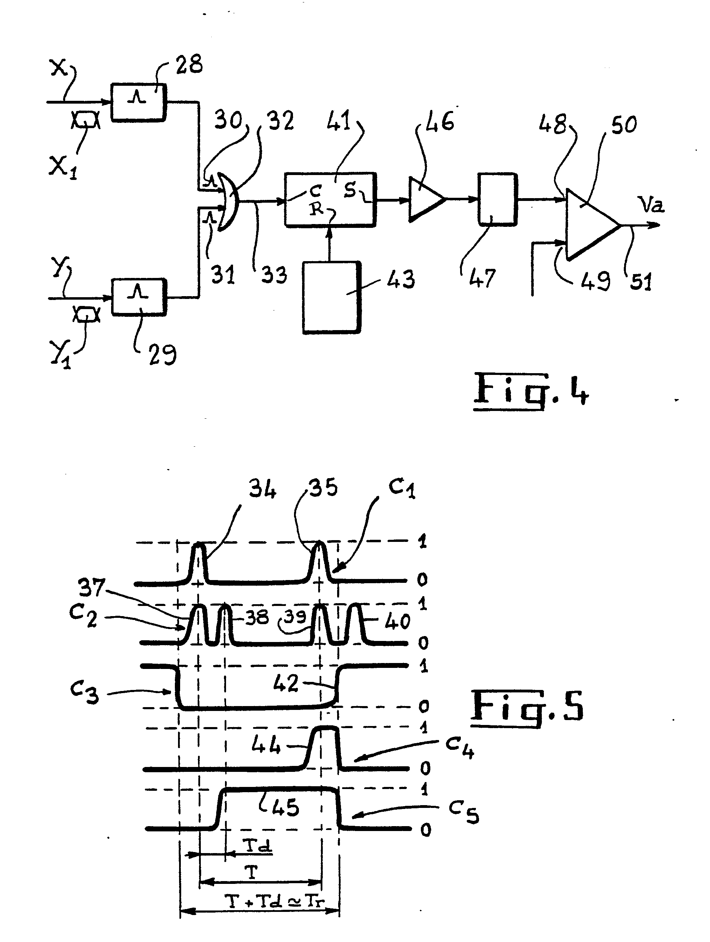

Ces moyens seront bien compris à l'aide des figures 4 et 5.

En se reportant à la figure 4, les yeux saturés X1 et Y1 sont respectivement appliqués à un circuit différentiateur, respectivement 28 et 29, qui transforme en impulsions 30, 31 le front de montée et le front de descente de chacun des signaux binaires saturés sur la voie X et sur la voie Y. Un tel différentiateur est par exemple constitué par une porte "OU-EXCLUSIF" qui reçoit d'une part le signal binaire, X ou Y selon le cas, et d'autre part ce même signal différentié par un circuit classique à résistance série et capacité parallèle.

Ces impulsions 30 et 31 sont appliquées à un circuit "OU" 32 dont la sortie 33 est représentée, sur le chronogramme amplitude/temps de la figure 5, par les deux premières courbes C1 et C2.

La courbe C1 montre le signal obtenu en 33 dans le cas où la boucle de Costas est correctement verrouillée. Dans ce cas, on a vu précédemment (figure 2), que les instants de passage à zéro des signaux binaires sont rigoureusement synchrones sur les deux voies X et Y. Il en est par suite de même pour les impulsions de différentiation 30 et 31, qui donnent chacune naissance, sur la sortie 33 du circuit OU 32, à une seule impulsion, dont une impulsion 34 pour le premier front d'un signal binaire saturé et une impulsion 35 pour l'autre front du même signal binaire saturé. On obtient donc, pour la courbe C1 et pour chaque signal binaire saturé possédant un front arrière et un front avant, deux impulsions successives 34, 35 séparées par un intervalle de temps égal à la largeur-bit T.

Dans le cas contraire où la boucle est soit déverrouillée, soit incorrectement verrouillée (figure 3), on a vu précédemment que les instants de passage à zéro ne sont pas synchrones sur les deux voies X et Y. Il en est donc de même des impulsions 30 et 31, qui ne se présentent donc pas en même temps sur les deux entrées de la porte OU 32. Pour un signal binaire présentant un front arrière et un front avant, le signal obtenu en 33 est alors celui de la courbe C2 : au lieu de deux impulsions séparées par une largeur-bit T, on obtient deux doublets d'impulsions, 37-38 et 39-40, ces deux doublets étant séparés l'un de l'autre par la largeur-bit précitée T.

Ces signaux en 33, C1 en cas de verrouillage correct ou C2 en cas de verrouillage incorrect ou de déverrouillage, sont appliqués à l'entrée de comptage C d'un compteur binaire 41, ce compteur étant diviseur par quatre et comprenant donc deux bascules binaires.

Sur l'entrée de remise à zéro R de ce diviseur par quatre 41 est appliqué un signal carré 42, courbe C3 sur la figure 5, provenant d'un oscillateur 43 qui n'a pas nécessairement de relation de synchronisme avec l'oscillateur local 7 de la boucle de Costas. Le signal 42 de la courbe C3 correspond à une position relative de ce signal par rapport à ceux des courbes C1 ou C2, mais il est bien entendu que, ces signaux n'étant pas synchronisés l'un par rapport à l'autre, cette position relative est quelconque et varie continûment.

Le signal obtenu sur la sortie S, divisée par quatre, du compteur binaire 41 est respectivement représenté sur la courbe C4, lorsque le signal de comptage en C est celui de la courbe C1, et sur la courbe C5 lorsqu'il s'agit du signal de comptage représenté sur la courbe C2.

La demi-période Tr du signal carré de remise à zéro 42 est déterminée pour être sensiblement égale à la largeur-bit T précitée, additionnée de l'intervalle moyen Td entre les deux impulsions successives, 37 et 38 ou 39 et 40, d'un même doublet d'impulsions de la courbe C2. Cet intervalle Td est déterminé par des mesures sur l'oeil effectuées en laboratoire.

En prenant tout d'abord le cas où la boucle est correctement verrouillée (courbe C1), le compteur binaire 41 est dans l'état "00" juste avant l'impulsion 34, puisqu'il a été précédemment remis à zéro par le signal 42. A réception de l'impulsion 34, il passe à l'état "10", de sorte que sa sortie S, représentée par l'état de sa seconde bascule, reste à 0. A réception de l'impulsion suivante 35, il passe à l'état "01", de sorte que sa sortie S passe à 1 (courbe C4). Peu après, le signal 42 remet à zéro le compteur, de sorte que la sortie S repasse à zéro : le signal de sortie obtenu en S est une impulsion 44 d'assez faible largeur.

Lorsque la boucle est mal verrouillée ou déverrouillée (courbe C2), la sortie S passe à l'état 1 lors de la seconde impulsion 38 du premier doublet. Elle reste à cet état à la réception de l'impulsion 39 du deuxième doublet, puisqu'à la réception de celle-ci le compteur 41 passe de l'état "01" à l'état "11". Peu après, le signal 42 repasse au niveau 1, ce qui remet à zéro le compteur 41 ainsi que sa sortie S, de sorte que le signal 45 de la courbe C5 repasse à l'état 0. Il apparaît finalement dans ce cas une impulsion sur la sortie 5 qui est de largeur bien plus grande que l'impulsion 44 précédemment citée. Il en sera de même pour d'autres cas de figure, correspondant à d'autres positions relatives des signaux de remise à zéro 42 par rapport aux signaux incidents 30 et 31, comme il est aisé de le vérifier en reprenant le raisonnement précédent pour chacun de ces cas de figure : l'intégrale du signal en S obtenue en cas de déverrouillage ou de verrouillage incorrect est toujours bien supérieure à celle du même signal obtenue en cas de verrouillage correct.

Les impulsions, 44 ou 45, issues du compteur 41 en S sont amplifiées et mises en forme dans un circuit 46 et sont appliquées à un intégrateur 47, dont la tension continue de sortie, faible dans le cas de la courbe C4 et bien plus élevée dans le cas de la courbe C5, est appliquée à la première entrée 48 d'un comparateur analogique 50, qui reçoit sur son autre entrée 49 une tension de référence définissant le seuil d'alarme.

Sur la sortie 51 du comparateur 50 apparait en conséquence une tension d'alarme Va dans le cas où la tension en 48 est supérieure à la tension de seuil en 49, c'est à dire lorsque la boucle est déverrouillée ou incorrectement verrouillée.

Comme il va de soi, l'invention n'est pas limitée à l'exemple de réalisation qui vient d'être décrit, et d'autres dispositifs de mise en oeuvre du même moyen général pourraient aussi bien être utilisés.

## Revendications

1/ Dispositif d'alarme apte à signaler l'état de déverrouillage ou de verrouillage incorrect d'une boucle de Costas faisant partie d'un dispositif de démodulation cohérente utilisé dans une installation de transmission numérique par faisceaux hertziens, cette installation utilisant la Modulation d'Amplitude en Quadrature, caractérisé en ce qu'il est équipé de moyens (28, 29, 32, 41, 43 et 46 à 51) pour détecter un défaut de synchronisme des instants de passage à zéro (24, 25) entre les deux voies en quadrature (X, Y) du signal, démodulé et en bande de base, en sortie de la boucle de Costas, et pour déclencher une alarme (Va) en conséquence, ces moyens comportant pour chacune des deux voies en quadrature (X, Y), un organe différentiateur (28, 29) auquel est appliqué le signal (X1, Y1) de l'oeil saturé correspondant, cet organe différentiateur fournissant une impulsion (30, 31) respectivement pour chaque front de montée et pour chaque front de descente du signal (X1, Y1) correspondant à l'oeil saturé, ces impulsions (30, 31) étant respectivement appliquées aux deux entrées d'une porte "OU" (32) qui est elle même suivie d'un circuit (41, 43, 46 à 51) apte à détecter la présence répétitive de doublets d'impulsions (37, 38 et 39, 40) séparés l'un de l'autre par un intervalle de temps égal à la largeur-bit (T) du signal modulant, et à déclencher en conséquence ladite alarme (Va).

2/ Dispositif selon la revendication 1, caractérisé en ce que ledit circuit comporte un compteur binaire diviseur par quatre (41), qui est remis à zéro par un signal carré (42) dont les créneaux ont une largeur (Tr) sensiblement égale à la largeur-bit (T) augmentée de l'intervalle moyen (Td) entre les deux impulsions (37, 38) de chacun desdits doublets, le signal de sortie divisé par quatre (S) de ce compteur binaire (41) étant appliqué à un dispositif d'intégration (47), lui-même suivi d'un circuit à seuil (50) dont la sortie (51) fournit la tension d'alarme (Va).

**Fig.1**

**Fig.2**

**Fig.3**

## Fig. 4

$X_1$

28

$X_1$

$Y_1$

29

$Y_1$

30 32 41 46 48 50

31 33 43 47 49 51

$V_a$

## Fig. 5

34 35 $C_1$

1
0

37
$C_2$ 38 39 40

1
0

$C_3$ 42

1
0

44 $C_4$

1
0

45 $C_5$

1
0

$T_d$

$T$

$T + T_d \simeq T_r$

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SU-A-1 046 940 (DANIELYAN) <br> * Colonne 2, lignes 29-45; figure * <br> --- | 1,2 | H 04 L 27/38 |
| A | PATENT ABSTRACTS OF JAPAN, vol. 12, no. 379 (E-667)[3226], 11 octobre 1988; & JP-A-63 126 342 (MITSUBISHI ELECTRIC CORP.) 30-05-1988 <br> * Résumé; figure * <br> --- | 1 | |
| A | PATENT ABSTRACTS OF JAPAN, vol. 9, no. 131 (E-319)[1854], 6 juin 1985; & JP-A-60 16 049 (NIPPON DENKI K.K.) 26-01-1985 <br> * Résumé; figure * <br> --- | 1 | |
| A | DE-A-3 338 664 (SIEMENS AG) <br> ----- | | |

**DOMAINES TECHNIQUES RECHERCHES (Int. Cl.5)**

H 04 L

**Le présent rapport a été établi pour toutes les revendications**

| Lieu de la recherche | Date d'achèvement de la recherche | Examinateur |
|---|---|---|
| LA HAYE | 02-03-1990 | VEAUX,C.J. |